# EUROPÄISCHE PATENTANMELDUNG

(11) **EP 3 805 529 A1**
(43) Veröffentlichungstag der Anmeldung: **14.04.2021**
(21) Anmeldenummer: 20201103.7
(22) Anmeldetag: 09.10.2020
(51) Int. Cl.: F01D 25/22, F01D 25/16, F01D 25/18, F01D 11/04, F01K 25/10, F02C 1/04, F02C 1/10, F02C 6/18, F04D 29/05, F16C 32/00, F16N 15/00

(54) **VERFAHREN ZUM BETRIEB EINER TURBOMASCHINE MIT KOHLENSTOFFDIOXID**

(30) Priorität: 11.10.2019 DE 102019127456
(71) Anmelder: ATLAS COPCO ENERGAS GMBH, 50999 Köln (DE)
(72) Erfinder: Schmied, Norbert, 50968 Köln (DE)
(74) Vertreter: Andrejewski - Honke Patent- und Rechtsanwälte Partnerschaft mbB

(57) **Zusammenfassung**

Die Erfindung betrifft ein Verfahren zum Betrieb einer Turbomaschine mit einem Gehäuse (1) und einem dem Gehäuse (1) durch zumindest ein Gleitlager (2a, 2b, 2c) drehbar gelagerten Rotor (3), welcher eine Welle (3) und ein daran befestigtes Laufrad einer Turbostufe (3b) umfasst. Die Turbostufe (3b) weist eine Hochdruckseite (4) und eine Niederdruckseite (5) auf. Durch die Turbostufe (3b) wird Kohlenstoffdioxid (CO₂) als Prozessmedium geführt, welches zumindest an der Hochdruckseite (4) im superkritischen Aggregatzustand vorliegt (SCO₂). Das Gleitlager (2a, 2b, 2c) wird mit superkritischem Kohlenstoffdioxid (SCO₂) beaufschlagt. Das dem Gleitlager (2a, 2b, 2c) zugeführte superkritische Kohlenstoffdioxid wird dem Prozessmedium entnommen. Das entnommene Prozessmedium wird mittels eines Zusatzverdichters (7a') komprimiert und anschließend dem Gleitlager (2a, 2b, 2c) zugeführt.

## Beschreibung

Die Erfindung betrifft ein Verfahren zum Betrieb einer Turbomaschine mit einem Gehäuse durch zumindest ein Gleitlager drehbar gelagerten Rotor, welcher eine Welle und ein daran befestigtes Laufrad einer Turbostufe umfasst. Die Turbostufe weist eine Hochdruckseite und eine Niederdruckseite auf. Durch die Turbostufe wird Kohlenstoffdioxid (CO₂) als Prozessmedium geführt, welches zumindest an der Hochdruckseite im superkritischen Aggregatzustand (SCO₂) vorliegt. Die Erfindung betrifft weiterhin eine Turbomaschine zur Durchführung des Verfahrens.

Turbomaschinen dienen der Energieübertragung zwischen einem Prozessmedium und einer Drehbewegung des Rotors. Hierzu zählen insbesondere Turbokompressoren, Turbopumpen sowie Turbinen bzw. Turboexpander. Die zumindest eine Turbostufe weist dabei Turboschaufeln auf, welche mit dem strömenden Prozessmedium wechselwirken, um einen Energieübertragung zu erzielen.

Kohlenstoffdioxid (CO₂) ist ein weitverbreitetes Prozessgas, welches in einer Vielzahl von chemischen Prozessen anfällt und/oder Verwendung findet. Zur Anpassung des benötigten Druckniveaus und/oder zur (Rück-)Gewinnung von Energie werden hierbei in der Verfahrenstechnik verschiedene Turbomaschinen eingesetzt.

Insbesondere bei Kreisprozessen zur Wärmerückgewinnung liegt das Kohlenstoffdioxid vermehrt auch im superkritischen Aggregatzustand vor. Die überkritische Phase ist durch Eigenschaften zwischen denen eines Gases und einer Flüssigkeit gekennzeichnet. Der kritische Punkt von Kohlenstoffdioxid, oberhalb dessen ein überkritisches Fluid existiert, liegt bei ca. 304 K (31 °C) und einem Druck von ca. 74 bar. Am kritischen Punkt hat das Kohlenstoffdioxid eine Dichte von ca. 470 kg/m³. Dieses lässt sich leicht verwenden und weist gleichzeitig eine hinreichend große Wärmekapazität für thermische Anwendungen auf.

Vorteilhaft bei Kohlendioxid ist insbesondere, dass oberhalb der kritischen Temperatur - welche in üblichen Prozessen stets überschritten ist - ein Druckabfall nur zu einem Phasenübergang in die Gasphase führen kann. Dagegen können keine für Turbomaschine schädlichen Flüssigkeitströpfchen entstehen. Um die positiven Eigenschaften des Kohlenstoffdioxids beizubehalten, muss eine Verunreinigung mit Fremdstoffen vermieden werden.

Gleichzeitig ist zum reibungslosen Betrieb einer Turbomaschine eine sichere Lagerung des Rotors in dem Gehäuse notwendig. Durch diese wird eine möglichst reibungsfreie Drehbewegung an den Lagern ermöglicht. Jedoch treten an üblichen Lageranordnungen - sowohl Wälzkörperlagern als auch Gleitlagern - stets Verunreinigungen durch darin verwendetes Schmiermittel auf. Insbesondere eine Verunreinigung des Prozessfluids durch Schmierstoffe wie Öle bzw. Silikonöle oder Wasser(-Dampf)-Anteile muss strikt unterbunden werden. Auch eine Verunreinigung durch Umgebungsluft ist in hohem Maße schädlich.

Die Verwendung von superkritischem CO2 (sCO2) als Lagerfluid ist aus US 2019/0 293 117 A1 bekannt.

Vor diesem Hintergrund liegt der Erfindung die Aufgabe zugrunde, einen verbesserten Betrieb einer Turbomaschine mit superkritischem Kohlenstoffdioxid zu ermöglichen. Weiterhin ist eine Turbomaschine zur Durchführung eines solchen Verfahrens Ziel dieser Aufgabe.

Gegenstand der Erfindung und Lösung dieser Aufgabe ist ein Verfahren nach Patentanspruch 1 sowie eine Turbomaschine nach Patentanspruch 7. Bevorzugte Ausgestaltungen sind in den abhängigen Unteransprüchen angegeben.

Ausgehend von dem gattungsgemäßen Verfahren ist im Rahmen der Erfindung vorgesehen, dass das Gleitlager mit superkritischem Kohlenstoffdioxid beaufschlagt wird. Durch eine Spülung des Gleitlagers mit superkritischem Kohlendioxid wird ein Eintrag von Fremdstoffen vermieden. Gleichzeitig basiert die vorliegende Erfindung auf der Erkenntnis, dass superkritisches Kohlenstoffdioxid auch als Spül- und/oder Schmiermedium geeignet ist.

Gemäß einer bevorzugten Ausgestaltung der Erfindung liegt das dem Gleitlager zugeführte superkritische Kohlenstoffdioxid zumindest in der Reinheit des Prozessmediums vor. Soweit ist in dem dem Gleitlager zugeführten Kohlenstoffdioxid ein geringerer Massenanteil an Fremdstoffen enthalten ist als in dem Prozessmedium. Dadurch wird - auch bei einem Abfluss des zugeführten superkritischen Kohlenstoffdioxids in dem Prozess - eine Verunreinigung verhindert.

Gemäß einer ersten bevorzugten Ausgestaltung ist das Gleitlager als hydrostatisches Gleitlager mit superkritischem Kohlenstoffdioxid als Arbeitsfluid ausgestaltet. Hierbei bildet das superkritische Kohlenstoffdioxid einen Fluidfilm in dem Gleitlager, welches eine zugeordnete Anlagefläche des Rotors umgibt. Durch den Fluidfilm wird ein direkter Materialkontakt zwischen dem Rotor und dem Gleitlager verhindert. Erstaunlicherweise bildet dieser Fluidfilm aus SCO₂ eine geringe Reibung aus, und stellt so einen sicheren und störungsfreien Betrieb der Turbomaschine sicher.

In einer zweiten bevorzugten Ausgestaltung ist das Gleitlager als hydrodynamisches Gleitlager mit superkritischem Kohlenstoffdioxid als Arbeitsfluid ausgestaltet. Im Rahmen der vorliegenden Erfindung hat sich gezeigt, dass superkritisches Kohlendioxid auch in diesem Typus von Gleitlagern einsetzbar ist. Bei einem hydrodynamischen Gleitlager wird das Arbeitsfluid mit einem geringeren Druck und/oder Durchfluss als bei einem hydrostatischen Gleitlager zugeführt. Die Schmierwirkung des zwischen dem Gleitlager und dem Rotor befindlichen Arbeitsfluids wird erst durch eine Drehbewegung des Rotors hervorgerufen.

Gemäß einer besonders bevorzugten Ausgestaltung sind an dem Rotor mehrere Gleitlager angeordnet, welche mit superkritischem CO₂ beaufschlagt werden. Dabei können sowohl Axiallager und Radiallager als auch hydrodynamische Lager und hydrostatische Lager miteinander kombiniert werden.

Gemäß einer besonders bevorzugten Ausgestaltung wird die Lagerung des Rotors im Betrieb ausschließlich mit SCO₂-gespülten Gleitlagern bewirkt. Somit wird im Betrieb ausschließlich eine verschleißarme, leicht gängige und verschmutzungsfreie Lagerungsmethode eingesetzt. Hiervon unbenommen sind etwaige Fanglager, welche insbesondere als schmiermittelfreie Nadellager ausgebildet sein können. Diese Fanglager haben im Normalbetrieb keinen Kontakt mit dem Rotor und werden erst bei einem Versagen der SCO₂-Versorgung bzw. bei einer Verlangsamung des Rotors aktiv.

Erfindungsgemäß wird das dem Gleitlager zugeführte superkritische Kohlenstoffdioxid dem Prozessmedium, insbesondere an der Hochdruckseite entnommen. Hierbei ist von besonderem Vorteil, dass das entnommene superkritische Kohlenstoffdioxid bereits in einer ausreichenden Reinheit und auf einem - zumindest nahezu - ausreichenden Druckniveau bereitgestellt wird.

Zweckmäßigerweise sind an dem Rotor mehrere - insbesondere in Reihe geschaltete - Turbostufen mit jeweils einer zugeordneten Hochdruckseite und einer zugeordneten Niederdruckseite angeordnet. Das dem Gleitlager - bzw. den Gleitlagern - zugeführte superkritische Kohlenstoffdioxid wird zweckmäßigerweise an der Hochdruckseite derjenigen Turbostufe mit dem höchsten Druck entnommen. Somit muss an dem Gleitlager keine wesentliche Druckerhöhung erzeugt werden, um einen Überdruck gegenüber sämtlichen Punkten des Kreisprozesses zu erzielen. Dadurch kann ein Strom des superkritischen Kohlenstoffdioxids von dem Gleitlager in Richtung des Kreisprozesses - und somit eine Verhinderung eines zusätzlichen Eintrags von Fremdstoffen - sichergestellt werden.

Gemäß einer nicht erfindungsgemäßen Variante wird das Kohlenstoffdioxid mittels einer Abzweigleitung unmittelbar von der Hochdruckseite zu dem Gleitlager geführt. Die Abzweigleitung ist dabei in unmittelbarer räumlicher Nähe zu der Turbostufe angeordnet.

Erfindungsgemäß wird das entnommene Prozessmedium mittels eines Zusatzverdichters komprimiert und anschließend dem Gleitlager zugeführt. Hierdurch können insbesondere für eine hydrostatische Gleitlagerung notwendige überhöhte Drücke erzielt werden.

Gegenstand der Erfindung ist auch eine Turbomaschine mit einem Gehäuse und einem in dem Gehäuse durch zumindest ein Gleitlager drehbar gelagerten Rotor, welcher eine Welle und zumindest ein daran befestigtes Laufrad einer Turbostufe umfasst. Die Turbostufe weist eine Hochdruckseite und eine Niederdruckseite auf. Die Turbostufe ist ferner dazu ausgebildet, mit Kohlenstoffdioxid (CO₂) als Prozessmedium beaufschlagt zu werden, welches zumindest an der Hochdruckseite im superkritischen Aggregatzustand vorliegt. Erfindungsgemäß ist vorgesehen, dass das Gleitlager als hydrostatisches oder hydrodynamisches Gleitlager ausgebildet ist, welches mittels einer Zuflussleitung mit superkritischem Kohlenstoffdioxid beaufschlagt werden kann. Durch die Verwendung von superkritischem Kohlenstoffdioxid als Spül- und Schmierfluid in dem Gleitlager kann eine Verunreinigung des Prozessmediums verhindert werden. Gleichzeitig zeigt superkritisches Kohlenstoffdioxid (SCO₂) überraschend gute Eigenschaften als Schmiermittel.

Erfindungsgemäß ist die Zuflussleitung dabei unmittelbar an die Hochdruckseite, die Niederdruckseite oder eine jeweils damit verbundene Rohrleitung angeschlossen. Das zugeführte superkritische Kohlenstoffdioxid wird somit dem Kreisprozess der Turbostufe entnommen und weist folglich dessen Reinheit auf. Eine weitere Verunreinigung ist daher ausgeschlossen.

Erfindungsgemäß ist innerhalb der Zuflussleitung ein Kompressor zur Erhöhung des Drucks des zugeführten superkritischen Kohlenstoffdioxids (SCO₂) angeordnet. Durch eine entsprechende Anordnung kann - insbesondere in einem hydrostatischen Gleitlager - der notwendige Druck des Mediums bereitgestellt werden.

Besonders zweckmäßig ist zwischen dem Gleitlager und dem Laufrad eine innere Wellendichtung, insbesondere eine Labyrinthdichtung angeordnet, welche das Gehäuse gegenüber der Welle abdichtet. Die Labyrinthdichtung bremst den Fluss von Kohlenstoffdioxid von dem Gleitlager in Richtung der Turbostufe, sodass eine geringere Menge von Kohlenstoffdioxid dem Gleitlager zugeführt werden muss.

Vorzugsweise ist zwischen dem Gleitlager und einem Gehäuseinnenraum eine äußere Wellendichtung angeordnet. Diese bildet eine Abdichtung zwischen dem Gleitlager und der Umgebung - d. h. insbesondere dem Gehäuseinnenraum und/oder der das Gehäuse umgebenden Umwelt. Im Gegensatz zu einer konventionellen Anordnung des Lagers befindet sich dieses damit nicht mehr im sogenannten "drucklosen Bereich" der Turbomaschine.

Bevorzugt ist die äußere Dichtung als Gleitringdichtung bzw. als Trockengasdichtung ausgebildet. Diese eignet sich insbesondere für hohe Prozessdrücke und die aufgrund des superkritischen Kohlenstoffdioxids im Bereich des Lagers notwendigen Drücke.

Durch die äußere Wellendichtung treten geringe Mengen des Kohlenstoffdioxids in den Außenraum über. Somit wird dieses gleichzeitig als Sperrgas eingesetzt, welches einen Eintrag von Fremdstoffen aus der Umwelt verhindert.

Zweckmäßigerweise ist innerhalb der Zuflussleitung ein Steuerungsmodul zur Regelung eines Parameters des superkritischen Kohlenstoffdioxids (SCO₂), welches dem Gleitlager zugeführt wird, angeordnet. Hierbei kann es sich insbesondere um die Zuflussmenge an SCO₂, den Absolutdruck des zugeführten SCO₂ und/oder einen Differenzdruck zu einem bestimmten Referenzpunkt handeln. Der Referenzpunkt kann dabei an der Hochdruckseite der Turbostufe, an der Niederdruckseite der Turbostufe, im Inneren des Steuerungsmoduls, in einem Zwischenraum zwischen dem Gleitlager und einer etwaigen Wellendichtung oder an einem anderen Ort liegen.

Gemäß einer bevorzugten Ausgestaltung kann das Steuerungsmodul den Druck innerhalb des Gleitlagers zur Einstellung eines axialen Schubausgleichs einstellen. Hierbei wird das zugeführte superkritische Kohlenstoffdioxid gleichzeitig als Hydraulikfluid verwendet.

Gemäß einer besonders bevorzugten Ausgestaltung ist die Turbomaschine als Compander ausgebildet. Dabei ist eine erste Turbostufe als Kompressor und eine zweite auf derselben Welle des Rotors angeordnete Turbostufe als Expander ausgebildet. Der Compander kann entweder freilaufend ausgebildet sein, wobei die dem Kompressor zugeführte mechanische Energie ausschließlich aus dem in der Expanderstufe erzeugten Abtrieb generiert wird. Zweckmäßigerweise weist die Welle des Companders jedoch eine Antriebs-/Abtriebseinheit auf, welche aus einem mechanischen Anschluss an eine An-/Abtriebswelle und/oder einen mit der Welle mechanisch gekoppelten Läufer einer elektromotorischen Maschine gebildet sein kann.

Zweckmäßigerweise ist der Läufer einer elektrischen Maschine unmittelbar auf der Welle angeordnet. Hierdurch können etwaige Energiedefizite bzw. Energieüberschüsse zwischen dem Abtrieb des Expanders und dem Antrieb des Kompressors unmittelbar ausgeglichen werden. Eine solche direkte Anordnung auf der Welle ermöglicht ebenso eine vollständige hermetische Kapselung des Rotors innerhalb des Gehäuses der Turbomaschine. Es sind daher keine Durchbrüche im Gehäuse notwendig, welche gegenüber einem Druckabfall zum Umgebungsdruck abgedichtet werden müssten.

Die Erfindung wird nachfolgend anhand von lediglich Ausführungsbeispiele darstellenden Zeichnungen erläutert. Es zeigen dabei schematisch:
- Fig. 1: eine teilweise Schnittdarstellung durch eine nicht erfindungsgemäße Turbomaschine,
- Fig. 2: eine Schnittdarstellung einer erfindungsgemäßen Turbomaschine gemäß einem Ausführungsbeispiel und
- Fig. 3: einen Detailausschnitt aus Fig. 2.

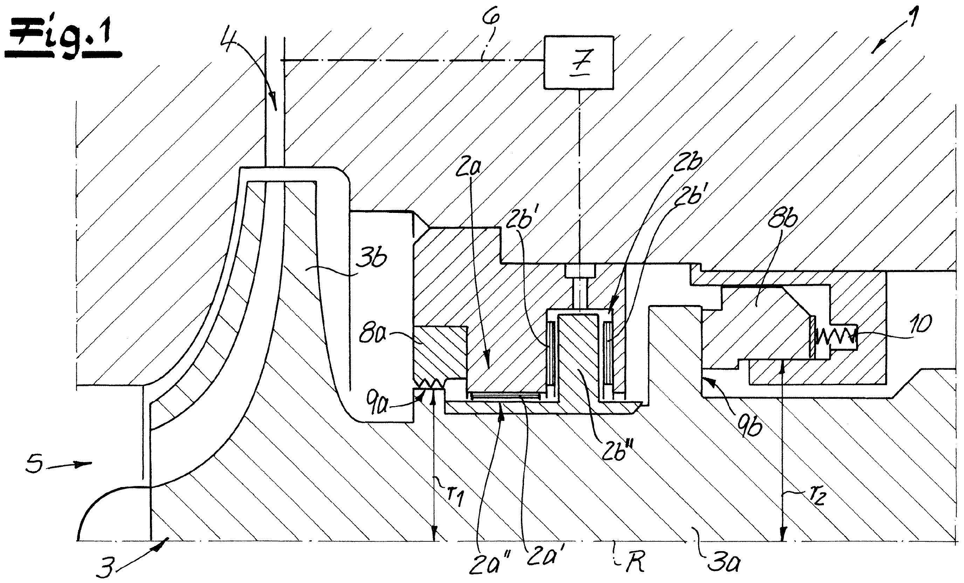

Die Fig. 1 zeigt schematisch eine nicht erfindungsgemäße Turbomaschine mit einem Gehäuse 1 und einem in dem Gehäuse 1 durch zumindest ein Gleitlager 2a, 2b drehbar gelagerten Rotor 3. Der Rotor 3 umfasst eine Welle 3a und eine an der Welle 3a befestigtes Laufrad einer Turbostufe 3b. Der Turbostufe 3b ist eine Hochdruckseite 4 und eine Niederdruckseite 5 zugeordnet. In dem Ausführungsbeispiel gemäß Fig. 1 ist ein Turbokompressor dargestellt, welcher ein Prozessmedium von den Niederdruckseite 5 zu der Hochdruckseite 4 fördert und dabei dessen Druck erhöht. Die durch das Laufrad 3b gebildete Turbostufe ist dazu ausgebildet, mit Kohlenstoffdioxid (CO) als Prozessmedium beaufschlagt zu werden, wobei zumindest an der Hochdruckseite 4 das Kohlenstoffdioxid im superkritischen Aggregatzustand vorliegt. Die erfindungsgemäße Turbomaschine ist dabei gleichermaßen in Kreisprozessen einsetzbar, bei denen das Kohlenstoffdioxid auf der Niederdruckseite 5 bereits im superkritischen Zustand vorliegt oder nicht.

Die Gleitlager 2a, 2b sind einerseits als radiales Gleitlager 2a und als axiales Gleitlager 2b ausgebildet. Erfindungsgemäß sind beide Gleitlager 2a, 2b als hydrostatische Gleitlager ausgebildet, welche mittels einer lediglich gestrichelt angedeuteten Zuflussleitung 6 mit superkritischem Kohlenstoffdioxid beaufschlagt werden. Das gezeigte Ausführungsbeispiel entspricht dabei der einfachsten Variante, bei der das superkritische Kohlenstoffdioxid unmittelbar von der Hochdruckseite 4 der Kompressorstufe 3b abgezweigt wird. Ebenfalls schematisch angedeutet ist eine Kontrolleinheit 7, mittels derer das Druckniveau des in das doppelte Gleitlager 2a, 2b eingespeichert superkritischen Kohlenstoffdioxids reguliert wird. Die Lageranordnung 2a, 2b wird zur Turbostufe 3b hin durch eine innere Dichtung 8a abgedichtet. Diese innere Dichtung 8a ist als Labyrinthdichtung ausgebildet, welche mit einer zugeordneten Dichtfläche 9a der Rotorwelle 3a wechselwirkt. Die zugeordnete innere Dichtfläche 9a ist auf einem ersten Radius r₁ um die Rotationsachse R des Rotors 3 angeordnet. Durch die Zylindersymmetrie der inneren Dichtfläche 9a ist in geringen Maßen eine axiale Verschiebung des Rotors 3 entlang der Rotationssachse R möglich.

Das axiale Lager 2b weist eine gehäusefeste Verteilstruktur 2b' auf, welche mit superkritischem Kohlenstoffdioxid gespült wird und beidseits einer radial von der Welle 3a vorstehenden Lagerscheibe 2b" angeordnet ist. Entsprechend ist das Radiallager durch eine zylindersymmetrische äußere Verteilstruktur 2a' gebildet, welche mit einer zylindersymmetrischen Lagerfläche 2a" an der Außenseite der Welle 3a wechselwirkt.

Auf der dem Laufrad der Turbostufe 3b abgewandten Seite der Dichtungsanordnung 2a, 2b ist ein äußerer Dichtring 8b in Form einer Trockengasdichtung angeordnet, welcher mit einer radial vorstehenden Dichtungsfläche 9b des Rotors 3 in Anlage steht. Der Dichtungsring 8b ist in der Axialrichtung entlang der Drehachse R verschiebbar an dem Gehäuse 1 gehalten und durch ein Federelement 10 in Richtung der Dichtfläche 9b vorgespannt. Somit erlaubt auch die zweite Dichtungsanordnung 8b, 9b eine axiale Verschiebung des Rotors 3. Der effektive Radius r₂ der zweiten Dichtungsanordnung, auf dem der äußere Dichtring 8b verschiebbar ist, unterscheidet sich dabei von dem ersten Radius r₁ der inneren Dichtfläche 9a. Im gezeigten Ausführungsbeispiel ist der zweite Radius r₂ größer als der erste Radius r₁. Infolgedessen kann die Einstellung des Absolutdrucks in dem Bereich zwischen der inneren Dichtungsanordnung 8a, 9a und der äußeren Dichtungsanordnung 8b, 9b - und damit die Differenzdrücke zu der Turbostufe einerseits und zum Außenraum andererseits - dazu genutzt werden, ein axiales Moment in Richtung der Drehachse R aufzubauen. Die Steuereinheit 7 kann damit dazu genutzt werden, axiale Lasten auf den Rotor 3 auszugleichen, indem der Absolutdruck, mit dem das superkritische Kohlenstoffdioxid zugeführt wird, entsprechend angepasst wird.

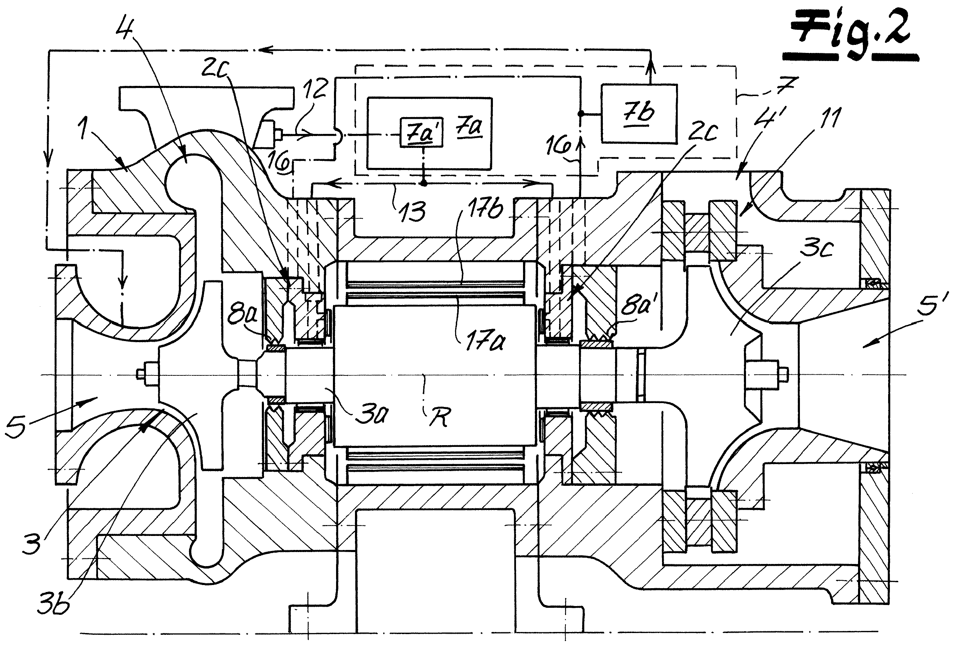

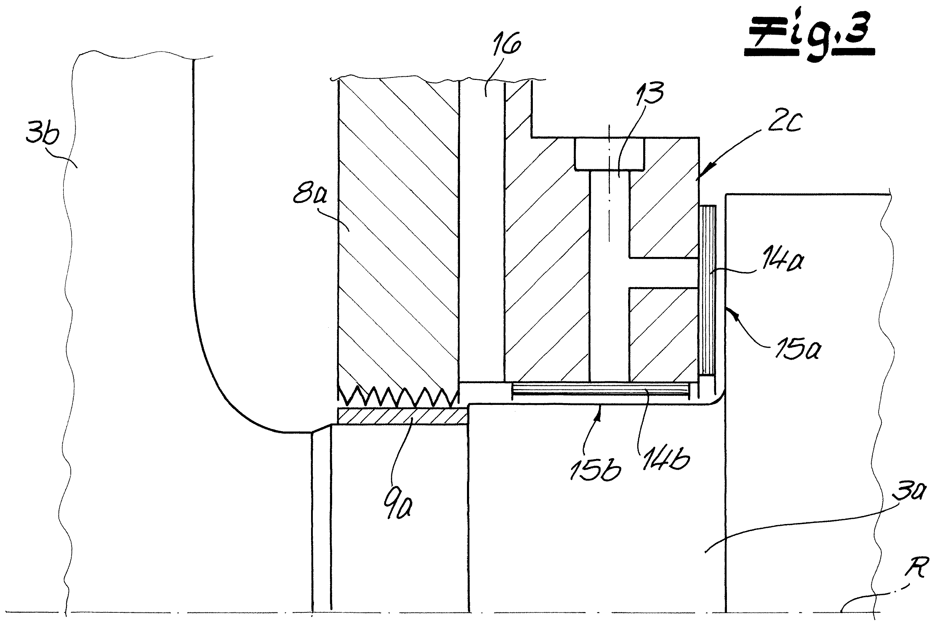

Ein erfindungsgemäßes Ausführungsbeispiel ist in den Fig. 2 und 3 dargestellt. Das Gehäuse 1 umfasst zwei Gleitlager Einheiten 2c, an denen ein Rotor 3 drehbar gehalten ist. Die Turbomaschine ist dabei als Compander ausgebildet, wobei die Rotorwelle 3a einerseits eine Kompressorstufe 3b und andererseits eine Expander Stufe 3c aufweist. Die Expander Stufe 3c wird von einer Hochdruckseite 4' über einen Leitungsapparat 11 angeströmt wodurch die Bewegungs-und Druckenergie des Arbeitsfluids - Kohlenstoffdioxid - in eine Drehbewegung der Welle 3a umgesetzt wird. An einer Niederdruckseite 5' wird das austretende Arbeitsfluid abgezogen. Das Laufrad 3c der Expanderstufe ist dabei fliegend an einem Wellenende angeordnet.

An dem gegenüberliegenden Ende der Rotorwelle 3a ist das Laufrad 3b einer Kompressorstufe angeordnet, welche das Arbeitsfluid Kohlenstoffdioxid von einer Niederdruckseite zu einer Hochdruckseite 4 fördert. Dabei komprimiert. Zumindest an der Hochdruckseite 4 liegt das Kohlenstoffdioxid im superkritischen Aggregatzustand vor. Dort wird es mit einer Abzweigleitung 12 entnommen und einem Steuerungssystem 7 zugeführt. Das Steuerungssystem 7 verteilt das superkritische Kohlenstoffdioxid auf die beiden Gleitlager 2c und regelt dabei den Druck und die Durchflussmenge.

In der Fig. 3 ist das Gleitlager 2c in einer Detaildarstellung sichtbar. Das Gleitlager 2c ist als kombiniertes Radial-und Axiallager ausgebildet, wobei eine von dem Steuerungsmodul 7 entspringende Versorgungsleitung 13 eine Verzweigung aufweist und gleichzeitig eine erste Verteilstruktur 14a für die axiale Lagerung und eine zweite Verteilstruktur 14b für die radiale Lagerung mit superkritischem Kohlenstoffdioxid beaufschlagt. Der ersten Verteilstruktur 14a gegenüberliegend ist eine radial vorspringende Wellenschulter 15a angeordnet, welche eine Lagerfläche des Gleitlagers bildet. Entsprechend steht die zweite Verteilstruktur 14b einer zylindersymmetrischen Außenfläche 15b der Welle 3a gegenüber. Gegenüber der Kompressorstufe ist die Lageranordnung 2c durch eine innere Labyrinthdichtung 8a und eine gegenüberliegende Dichtfläche 9a abgetrennt.

Beide Lagereinheiten 2c sind spiegelsymmetrisch zueinander aufgebaut und auch gegenüber der zugeordneten Turbostufen 3b, 3c durch jeweils eine innere Dichtung 8a, 8a' abgegrenzt. Die Steuereinheit 7 weist neben dem SCO₂-Versorgungsmodul 7a auch ein SCO₂-Kontrollmodul 7b auf. Dieses regelt den Abfluss des Kohlendioxids aus dem Zwischenraum zwischen den beiden inneren Wellendichtungen 8a, 8a' durch die entsprechenden Spülleitungen 16. Das abgezogene Kohlendioxid wird dann der Saugseite 5 der Kompressorstufe 3b zugeführt, wo es mit dem übrigen Prozessmedium vereinigt wird.

In dem gezeigten Ausführungsbeispiel ist in dem Versorgungsmodul 7a erfindungsgemäß ein Kompressor 7a' zur Druckerhöhung vorgesehen.

Im mittleren Bereich des Rotors 3 ist der Läufer 17a einer elektrischen Maschine angeordnet. Demgegenüber ist ein gehäusefester Stator 17b mit dem Gehäuse 1 verbunden. Der Läufer 17a und der Stator 17b bilden gemeinsam eine elektrischen Maschine, welche im Bedarfsfall sowohl als Generator als auch als Elektromotor eingesetzt werden kann. Hierdurch kann ein Leistungsüberschuss bzw. ein Leistungsdefizit zwischen der Expanderleistung der Expanderstufe 3c und dem Energiebedarf der Kompressorstufe 3b ausgeglichen werden.

## Patentansprüche

1. Verfahren zum Betrieb einer Turbomaschine mit einem Gehäuse (1) und einem in dem Gehäuse (1) durch zumindest ein Gleitlager (2a, 2b, 2c) drehbar gelagerten Rotor (3), welcher eine Welle (3a) und ein daran befestigtes Laufrad einer Turbostufe (3b) umfasst, wobei die Turbostufe (3b) eine Hochdruckseite (4) und eine Niederdruckseite (5) aufweist und wobei durch die Turbostufe (3b) Kohlenstoffdioxid (CO₂) als Prozessmedium geführt wird, welches zumindest an der Hochdruckseite (4) im superkritischen Aggregatzustand vorliegt (SCO₂), wobei das Gleitlager (2a, 2b, 2c) mit superkritischem Kohlenstoffdioxid (SCO₂) beaufschlagt wird und wobei das dem Gleitlager (2a, 2b, 2c) zugeführte superkritische Kohlenstoffdioxid dem Prozessmedium entnommen wird, **dadurch gekennzeichnet, dass** das entnommene Prozessmedium mittels eines Zusatzverdichters (7a') komprimiert und anschließend dem Gleitlager (2a, 2b, 2c) zugeführt wird.

2. Verfahren nach Anspruch 1, **dadurch gekennzeichnet, dass** das dem Gleitlager (2a, 2b, 2c) zugeführte superkritische Kohlenstoffdioxid an der Hochdruckseite (4, 4') entnommen wird.

3. Verfahren nach Anspruch 2, **dadurch gekennzeichnet, dass** an dem Rotor (3) mehrere insbesondere in Reihe geschaltete Turbostufen (3b, 3c) mit jeweils einer zugeordneten Hochdruckseite (4, 4') und einer zugeordneten Niederdruckseite (5, 5') angeordnet sind und dass das dem Gleitlager (2a, 2b, 2c) zugeführte superkritische Kohlenstoffdioxid an der Hochdruckseite (4) der Turbostufe (3b) mit dem höchsten Druck entnommen wird.

4. Verfahren nach einem der Ansprüche 1 bis 3, **dadurch gekennzeichnet, dass** das Gleitlager (2a, 2b, 2c) als hydrostatisches Gleitlager mit superkritischem Kohlenstoffdioxid als Arbeitsfluid ausgestaltet ist.

5. Verfahren nach einem der Ansprüche 1 bis 4, **dadurch gekennzeichnet, dass** das Gleitlager (2a, 2b, 2c) als hydrodynamisches Gleitlager mit superkritischem Kohlenstoffdioxid als Arbeitsfluid ausgestaltet ist.

6. Verfahren nach einem der Ansprüche 1 bis 5, **dadurch gekennzeichnet, dass** an dem Rotor (3) mehrere Gleitlager (2a, 2b, 2c) angeordnet sind, welche superkritischem CO₂ beaufschlagt werden.

7. Verfahren nach Anspruch 6, **dadurch gekennzeichnet, dass** die Lagerung des Rotors (3) im Betrieb ausschließlich mit SCO₂-gespülten Gleitlagern (2a, 2b, 2c) bewirkt wird.

8. Turbomaschine mit einem Gehäuse (1) und einem in dem Gehäuse (1) durch zumindest ein Gleitlager (2a, 2b, 2c) drehbar gelagerten Rotor (3), welcher eine Welle und zumindest ein daran befestigtes Laufrad (3b) einer Turbostufe umfasst, wobei die Turbostufe eine Hochdruckseite (4) und eine Niederdruckseite (5) aufweist und wobei die Turbostufen (3b, 3c) dazu ausgebildet ist, mit Kohlenstoffdioxid (CO₂) als Prozessmedium beaufschlagt zu werden, welches zumindest an der Hochdruckseite (4, 4') im superkritischen Aggregatzustand (SCO₂) vorliegt, wobei das Gleitlager (2a, 2b, 2c) als hydrostatisches oder hydrodynamisches Gleitlager ausgebildet ist, welches mittels einer Zuflussleitung (13) mit superkritischem Kohlenstoffdioxid (SCO₂) beaufschlagt werden kann, **dadurch gekennzeichnet, dass** die Zuflussleitung (13) unmittelbar an die Hochdruckseite (4, 4'), die Niederdruckseite (5, 5') oder eine jeweils damit verbundene Rohrleitung angeschlossen ist und dass innerhalb der Zuflussleitung (12, 13) eine Förderpumpe und/oder ein Kompressor (7a') zur Erhöhung des Drucks des zugeführten superkritischen Kohlenstoffdioxids (SCO₂) angeordnet ist.

9. Turbomaschine nach Anspruch 8, **dadurch gekennzeichnet, dass** zwischen dem Gleitlager (2a, 2b, 2c) und dem Laufrad eine Wellendichtung (8a, 8a'), insbesondere eine Labyrinthdichtung angeordnet ist, welche das Gehäuse (1) gegenüber der Welle (3a) abdichtet.

10. Turbomaschine nach einem der Ansprüche 8 oder 9, **dadurch gekennzeichnet, dass** innerhalb der Zuflussleitung (12, 13) ein Steuerungsmodul (7a) zur Regelung des Zuflusses an superkritischem Kohlenstoffdioxid (SCO₂) in das Gleitlager (2a, 2b, 2c) angeordnet ist.

11. Turbomaschine nach einem der Ansprüche 8 bis 10, **dadurch gekennzeichnet, dass** die Turbomaschine als Compander ausgebildet ist, wobei eine erste Turbostufe (3b) als Kompressor und eine zweite auf derselben Welle des Rotors (3) angeordnete Turbostufe (3c) als Expander ausgebildet ist.

12. Turbomaschine nach einem der Ansprüche 8 bis 11, **dadurch gekennzeichnet, dass** auf der Welle (3a) der Läufer (17a) einer elektrischen Maschine angeordnet ist.
